# EUROPEAN PATENT APPLICATION

(11) **EP 4 317 053 A1**
(43) Date of publication of application: **07.02.2024**
(21) Application number: 22775177.3
(22) Date of filing: 11.03.2022
(51) Int. Cl.: B82B 3/00, C09K 11/08, C09K 11/65, B82Y 40/00

(54) **METHOD FOR PRODUCING CARBON QUANTUM DOTS**

(30) Priority: 24.03.2021 JP 2021050403
(71) Applicant: Kureha Corporation, Chuo-ku Tokyo 103-8552 (JP)
(72) Inventor: TAKAHASHI, Yuka, Tokyo 103-8552 (JP); SAKABE, Hiroshi, Tokyo 103-8552 (JP); ISHIZU, Masaki, Tokyo 103-8552 (JP); KATSURAO, Takumi, Tokyo 103-8552 (JP)
(74) Representative: Zimmermann & Partner Patentanwälte mbB
(86) International application number: PCT/JP2022/010764
(87) International publication number: WO 2022/202385

(57) **Abstract**

To provide a method for producing carbon quantum dots having high emission quantum yield through simple processes. A method for producing carbon quantum dots that solves the difficulty described above includes: preparing a mixture by mixing a crystalline compound containing boron, sulfur, or phosphorus, being solid at 1 atm and 25°C, and having crystallinity, and an organic compound having a reactive group; and preparing carbon quantum dots by heating the mixture at 100°C or higher and 300°C or lower substantially in the absence of a solvent. An amount of the crystalline compound in the mixture is 45 parts by mass or greater and 1000 parts by mass or less with respect to 100 parts by mass of the organic compound.

## Description

### TECHNICAL FIELD

The present invention relates to a method for producing carbon quantum dots that are in a solid state at 25°C and 1 atm.

### BACKGROUND ART

Carbon quantum dots are stable carbon-based microparticles having particle sizes of approximately a few nm to a several tens of nm and exhibit good fluorescence properties, and thus are expected to be used as photonics materials, such as those of solar cells, displays, and security inks. In addition, carbon quantum dots have low toxicity and high biocompatibility and thus are also expected to be applied to medical fields, such as biosensor and imaging.

As a luminous body containing carbon quantum dots, a luminous body containing a boric acid matrix and a carbon quantum dot carried in the matrix has been reported (Non-Patent Document 1). This document describes that the carbon quantum dot is formed by hydrothermal synthesis and, after a solid content is separated from a reaction solution by centrifugal separation, a dialytic purification product of a supernatant solution is freeze-dried to prepare a solid-state carbon quantum dot. The document also describes that, thereafter, the solid-state carbon quantum dot and a boric acid aqueous solution are mixed and heated at 100 to 400°C (e.g., heated at 180°C for 5 hours) to gradually vaporize moisture in the liquid mixture, and thus an amorphous glass-like composite body is furnished.

### Citation List

### Non-Patent Document

Non-Patent Document 1: Angewandte Chemie International Edition 2019, 58, 7278-7283

### SUMMARY OF INVENTION

### TECHNICAL PROBLEM

However, in this method, performance of various steps, such as hydrothermal synthesis, centrifugal separation, dialysis, freeze-drying, and combining with boric acid, is required, and various solvents and devices are further required.

The present invention is made in light of the difficulties described above, and an object is to provide a method for producing carbon quantum dots having high emission quantum yield through a significantly simple method.

### SOLUTION TO PROBLEM

The present invention provides a method for producing carbon quantum dots described below.
A method for producing carbon quantum dots,
the method including:
preparing a mixture by mixing
a crystalline compound containing boron, sulfur, and/or phosphorus and being solid at 1 atm and 25°C, and
an organic compound containing a reactive group; and
preparing carbon quantum dots by heating the mixture at 100°C or higher and 300°C or lower substantially in the absence of a solvent;
an amount of the crystalline compound in the mixture being 45 parts by mass or greater and 1000 parts by mass or less with respect to 100 parts by mass of the organic compound.

### ADVANTAGEOUS EFFECTS OF INVENTION

According to the method for producing carbon quantum dots of an embodiment of the present invention, carbon quantum dots having high emission quantum yield is produced through simple processes without performance of centrifugal separation, dialysis, freeze-drying, and the like.

### BRIEF DESCRIPTION OF THE DRAWINGS

FIG. 1A is a photograph of a composition containing carbon quantum dots and a crystalline compound produced by a method for producing carbon quantum dots of Example 3 taken by a transmission electron microscope. FIG. 1B is an enlarged photograph around a central part of the photograph of FIG. 1A.
FIG. 2A is a photograph of a composition containing carbon quantum dots and a crystalline compound produced by a method for producing carbon quantum dots of Example 10 taken by a transmission electron microscope. FIG. 2B is an enlarged photograph of the photograph of FIG. 2A. FIG. 2C is a photograph of an inner part of a pore of the photograph of FIG. 2B.
FIG. 3 is a graph showing an infrared transmission spectrum of carbon quantum dots produced in Example 5, Comparative Example 11, and Comparative Example 12.

### DESCRIPTION OF EMBODIMENTS

In the present specification, numerical ranges indicated by "to" refer to numerical ranges including the numerical values described before and after "to".

The method for producing carbon quantum dots of an embodiment of the present invention is a method to produce carbon quantum dots, and the resulting carbon quantum dots are in a solid state at 25°C and 1 atm. As described above, methods have been known where carbon quantum dots are prepared in a solvent, the carbon quantum dots are isolated by centrifugal separation and the like, and then the carbon quantum dots are mixed and combined with a boron compound in a solvent. However, this method has difficulties, such as production process being complicated and input energy and time being required.

On the other hand, in the method for producing carbon quantum dots according to an embodiment of the present invention, an organic compound that is a major raw material for the carbon quantum dots and a crystalline compound that contains boron, sulfur, and/or phosphorus and that is solid at 1 atm and 25°C are mixed in a predetermined ratio to prepare a mixture (hereinafter, also referred to as "mixture preparation"). Then, carbon quantum dots are prepared by heating the mixture substantially in the absence of a solvent (hereinafter, also referred to as "heating").

When the heating is performed by mixing an organic compound and a relatively large amount of a crystalline compound as in an embodiment of the present invention, even without performance of complicated steps, carbon quantum dots having significantly high emission quantum yield are produced. The reason for increase of the emission quantum yield of the resulting carbon quantum dots is uncertain but is presumed as follows.

When the organic compound that is a raw material of the carbon quantum dots is heated, the organic compound is carbonized and becomes carbon quantum dots. At this time, if a crystalline compound is present around the carbon quantum dots, the resulting product has the carbon quantum dots finely dispersed in the crystalline compound. In this process, when a crystalline compound is in a solid state at a temperature at which the organic compound is carbonized, the crystalline structure or porous structure of the crystalline compound serves as a mold, resulting in uniformization of the sizes of the resulting carbon quantum dots. Furthermore, when the crystalline compound is in a liquid state at the temperature at which the organic compound is carbonized, in a formation process of carbon quantum dots through condensation of the organic compounds, the liquid crystalline compound is present around and chemically interacts with the organic compound and condensation products (including carbon quantum dots), and thus, side reactions and excessive condensation are suppressed, promoting uniformization of the particle size. Furthermore, the carbon quantum dots that are carried in the crystal or in the porous structure of the crystalline compound are less likely to aggregate, and a highly dispersed condition is maintained. Thus, it is conceived that this is why the emission quantum yield of the carbon quantum dots becomes high.

Furthermore, if the crystalline compound containing boron, phosphorus, and/or sulfur coexists around the organic compound at the time of preparation of the carbon quantum dots, boron atoms, phosphorus atoms, sulfur atoms, and functional groups containing these atoms are readily uniformly arranged on surfaces of the carbon quantum dots. It is conceived that these atoms or groups interact with a main backbone of the carbon quantum dot and increase the emission quantum yield.

In addition, when the carbon quantum dots are prepared by heating substantially in the absence of a solvent in the heating, in addition to the production processes being simplified, heating time required to prepare carbon quantum dots can be shortened, and input energy amount can be also reduced, which are advantageous. Furthermore, when the temperature at this time is set to 100°C or higher and 300°C or lower, the resulting carbon quantum dots tend to contain elemental hydrogen, and the carbon quantum dots tend to dissolve in water or a polar solvent. Steps of the method according to an embodiment of the present invention will be described below.

### • Mixture Preparation

In the mixture preparation, an organic compound having a reactive group and a crystalline compound that is in a solid state at 25°C and 1 atm are mixed to prepare a mixture. Note that the mixture prepared in the present step may contain other compounds besides the organic compound and the crystalline compound as long as the object and effect of the present invention are not impaired. For example, the mixture may further contain an organic compound or inorganic compound having no reactive group, a layered clay mineral, and the like. However, the total amount of the organic compound and the crystalline compound is preferably 50 mass% or greater, and more preferably 70 mass% or greater, with respect to the total amount of the mixture. When the total amount of the organic compound and the crystalline compound is 50 mass% or greater, the carbon quantum dots can be prepared efficiently. In particular, the mixture preferably contains substantially no layered clay mineral. In the present specification, containing substantially no layered clay mineral means the amount of the layered clay mineral being 5 mass% or less with respect to the total amount of the mixture. The amount of the layered clay mineral is more preferably 3 mass% or less, and even more preferably 1 mass% or less, and the layered clay mineral is yet even more preferably not contained at all.

The organic compound contained in the mixture is only required to be a compound having a reactive group and being capable of producing carbon quantum dots by carbonization (condensation reaction). The mixture may contain only one type of the organic compound or may contain two or more types of the organic compounds. In a case where the mixture contains two or more types of the organic compounds, these preferably contain groups that readily react each other.

Note that the "reactive group" contained in the organic compound is a group for causing polycondensation reaction or the like of the organic compounds in the heating described below, and is a group contributing to formation of a main backbone of the carbon quantum dot. Some of these reactive groups may remain in the carbon quantum dots produced by the heating. Examples of the reactive group include a carboxy group, a hydroxy group, an epoxy group, an amide group, a sulfo group, and an amino group.

Examples of the organic compound having a reactive group include a carboxylic acid, an alcohol, a phenol, an amine compound, a saccharide, an imidazole, a triazine, a triazole, a triazene, and an oxime. The organic compound may be in a solid or liquid state at 1 atm and 25°C and is more preferably in a solid state at 1 atm and 25°C.

The carboxylic acid, which is a type of the organic compounds, is any compound having one or more carboxy groups in the molecule (however, except those corresponding to phenols, amine compounds, or saccharides). Examples of the carboxylic acid include a monocarboxylic acid, such as formic acid, acetic acid, 3-mercaptopropionic acid, α-lipoic acid, and 4-carboxyphenylboronic acid; a polyvalent carboxylic acid that is divalent or higher, such as oxalic acid, malonic acid, succinic acid, maleic acid, fumaric acid, itaconic acid, polyacrylic acid, (ethylenedithio)diacetic acid, thiomalic acid, tetrafluoroterephthalic acid, and 2-phosphonobutane-1,2,4-tricarboxylic acid; and a hydroxy acid, such as citric acid, glycolic acid, lactic acid, tartaric acid, malic acid, and 5-sulfosalicylic acid.

The alcohol is any compound having one or more hydroxy groups bonded to a carbon atom (however, except those corresponding to carboxylic acids, phenols, amine compounds, or saccharides). Examples of the alcohol include polyhydric alcohols, such as ethylene glycol, glycerol, erythritol, pentaerythritol, ascorbic acid, polyethylene glycol, and sorbitol.

The phenol is any compound having a structure in which a hydroxy group is attached to a benzene ring. Examples of the phenol include phenol, catechol, resorcinol, hydroquinone, phloroglucinol, pyrogallol, 1,2,4-trihydroxybenzene, gallic acid, tannin, lignin, catechin, anthocyanin, rutin, chlorogenic acid, lignan, curcumin, 3-hydroxyphenylboronic acid, and 3-hydroxyphenylboronic acid pinacol ester.

Examples of the amine compound include 1,2-phenylenediamine, 1,3-phenylenediamine, 1,4-phenylenediamine, 2,6-diaminopyridine, urea, thiourea, ammonium thiocyanate, ethanolamine, 1-amino-2-propanol, melamine, cyanuric acid, barbituric acid, folic acid, ethylenediamine, diethylenetriamine, triethylenetetramine, polyethyleneimine, dicyandiamide, guanidine, aminoguanidine, formamide, glutamic acid, aspartic acid, cysteine, arginine, histidine, lysine, glutathione, RNA, DNA, cysteamine, methionine, homocysteine, taurine, thiamine, N-[3-(trimethoxysilyl)propyl]ethylenediamine, and 4,5-difluoro-1,2-phenylenediamine, sulfanilic acid, o-phosphoserine, adenosine 5'-triphosphate, guanidine phosphate, guanylurea phosphate, and 3-aminopropyltriethoxysilane, triethanolamine borate, 3-aminophenylboronic acid, 4-(diphenylamino)phenylboronic acid, 2-aminopyrimidine-5-boronic acid, 4-aminophenylboronic acid pinacol ester, and o-phosphorylethanolamine.

Examples of the saccharide include glucose, sucrose, glucosamine, cellulose, chitin, and chitosan.

Examples of the imidazole include 1-(trimethylsilyl)imidazole. Examples of the triazine include 1,2,4-triazine, and 1,3,5-triazine. Examples of the triazole include 1,2,3-triazole, and 1,2,4-triazole. Examples of the triazene include 1,3-diphenyltriazene and 1-methyl-3-p-tolyltriazene. Examples of the oxime include benzamidoxime and p-benzoquinone dioxime.

Among those described above, preferred is an organic compound that allows condensation reaction to proceed efficiently, and a preferred example include a carboxylic acid, a phenol, an amine compound, or a combination of a carboxylic acid and an amine compound.

On the other hand, the crystalline compound is only required to be a compound that contains boron, sulfur, and/or phosphorus, is in a solid state at 1 atm and 25°C, and has crystallinity. In the present specification, "having crystallinity" only requires a crystalline substance to be partially contained, and all the compounds may be made of crystalline substances, or an amorphous moiety may be contained in a part. The type of crystal is not particularly limited and maybe a single crystal or a polycrystal. Furthermore, the crystalline compound may be an inorganic compound or an organic compound.

Note that, in a case where the crystalline compound is an organic compound (including a case where a reactive group of the organic compound described above is contained), the compound (crystalline compound) can be distinguished from the organic compound described above based on whether the compound becomes carbon quantum dots or not in the heating described below. Specifically, when the compound is heated in a condition as in Examples (e.g., at 170°C for 1.5 hours) and the resulting carbonized product (condensation product) is irradiated with a light having a wavelength of 350 nm or higher and 700 nm or lower, a compound having a maximum emission in a wavelength range of 350 nm or higher and 700 nm or lower is treated as an organic compound. On the other hand, among compounds having no maximum emission, a compound that is solid at 1 atm and 25°C and that has crystallinity is treated as a crystalline compound. Note that, even when a compound has the reactive group described above, the compound may have no maximum emission described above and be classified as a crystalline compound.

Examples of the crystalline compound containing boron include boron, boric acid, sodium tetraborate, boric oxide, trioctadecyl borate, triphenyl borate, 2,4,6-triphenylboroxine, tris(2-cyanoethyl) borate, 2-anthratheneboronic acid, 9-anthratheneboronic acid, phenylboronic acid, 4-biphenylboronic acid, 3,5-bis(trifluoromethyl)phenylboronic acid, 4-hydroxyphenylboronic acid, 4,4'-biphenyldiboronic acid, 2-bromophenylboronic acid, 4-bromo-1-naphthaleneboronic acid, 3-bromo-2-fluorophenylboronic acid, 3-cyanophenylboronic acid, 4-cyano-3-fluorophenylboronic acid, 3,5-difluorophenylboronic acid, 3-fluorophenylboronic acid, 4-mercaptophenylboronic acid, 1-naphthaleneboronic acid, 9-phenanthreneboronic acid, 1,4-phenylenediboronic acid, 1-pyreneboronic acid, 2-bromopyridine-3-boronic acid, 2-fluoropyridine-3-boronic acid, 4-pyridylboronic acid, quinoline-8-boronic acid, 4-(4,4,5,5-tetramethyl-1,3,2-dioxaborolan-2-yl)pyridine, diboronic acid, tetrahydroxydiboron, sodium borohydride, and sodium tetrafluoroborate.

Examples of the crystalline compound containing phosphorus include elemental phosphorus, phosphorus oxide, 1-hydroxyethane-1,1-diphosphonic acid, phytic acid, ammonium phosphate, diammonium hydrogen phosphate, ammonium dihydrogen phosphate, phosphorus chloride, phosphorus bromide, tetrakis(hydroxymethyl)phosphonium chloride, nitrilotris(methylenephosphonic acid), N,N,N',N'-ethylenediaminetetrakis(methylenephosphonic acid), and phenylphosphonic acid.

Furthermore, examples of the crystalline compound containing sulfur include sulfur, sodium thiosulfate, sodium sulfide, sodium sulfate, p-toluenesulfonic acid, sodium hydrosulfide, 4-hydroxybenzenesulfonic acid hydrate, and sulfanilic acid.

Among these, boric acid or a compound having an aromatic ring in a molecule is preferred. Preferred examples of the compound having an aromatic ring in a molecule include phenylboronic acid, 2,4,6-triphenylboroxine, phenylphosphonic acid, 4-hydroxybenzenesulfonic acid hydrate, and sulfanilic acid.

The amount of the crystalline compound in the mixture is only required to be 45 parts by mass or greater and 1000 parts by mass or less, and is preferably 45 parts by mass or greater and 750 parts by mass or less, and more preferably 50 parts by mass or greater and 500 parts by mass or less, with respect to 100 parts by mass of the organic compound. When the amount of the crystalline compound is in the range, the size of the carbon quantum dot is readily adjusted because the crystalline compound serves as a mold in the heating described below.

Examples of another component besides the organic compound and the crystalline compound include a compound containing silicon or a compound containing fluorine. Examples of the compound containing silicon include tetrachlorosilane and tetraethoxysilane. Examples of the compound containing fluorine include 2,2,3,3,4,4-hexafluoro-1,5-pentanediol diglycidyl ether, 2-(perfluorohexyl)ethanol, and sodium fluoride.

The amounts of the compound containing silicon and the compound containing fluorine in the mixture are appropriately selected based on the amount of the desired heteroatom. Typically, the total amount of the compound containing silicon and the compound containing fluorine is preferably from 0 mass% to 20 mass%, and more preferably from 0 mass% to 10 mass%, with respect to the total amount of the mixture. When the amount of these compounds is 20 mass% or less, the amounts of the organic compound and the crystalline compound are relatively adequately increased, and thus the carbon quantum dots can be prepared more efficiently.

The mixing method of the mixture is not particularly limited as long as the method can uniformly mix the organic compound, the crystalline compound, and optionally another compound. For example, mixing may be performed while grinding is performed in a mortar, or mixing may be performed while crushing is performed by a ball mill or the like. Furthermore, in a case where the organic compound or another compound is a liquid, mixing may be performed by dissolving, blending, or dispersing a solid component in a liquid component. Alternatively, mixing may be performed by dissolving, blending, or dispersing each material in a small amount of a solvent. In this case, the amount and the type of the solvent are preferably adjusted in a manner that heating in the heating described below can be performed substantially in the absence of a solvent. Specifically, the amount and the type of the solvent are preferably adjusted in a manner that substantially all the solvent is volatilized before the temperature of the mixture reaches the heating temperature. Note that, in the present specification, a solvent means a compound that is liquid at 1 atm and 25°C and that does not correspond to the organic compound described above.

### Heating

In the heating, the mixture prepared in the mixture preparation described above is heated substantially in the absence of a solvent. In the present specification, "substantially in the absence of a solvent" means an amount of a solvent in the mixture being 5 mass% or less with respect to the total amount of the mixture at the time when a temperature reaches the temperature for carbonizing the organic compound and the like (heating temperature). The amount of the solvent in the mixture at the heating temperature is more preferably 2 mass% or less, and even more preferably 0 mass%. Thus, as described above, as long as the solvent can be adequately volatilized before the heating temperature is reached, the mixture may contain a solvent at the start of the heating. Note that the organic compound, which is a raw material of the carbon quantum dots, and the crystalline compound may be in a liquid state at the heating temperature.

The heating method of the mixture is only required to be a method that can produce the carbon quantum dots by carbonizing the organic compound and the like, and examples thereof include heating by a heater and irradiation of electromagnetic wave.

In a case where the mixture is heated by a heater or the like, the heating temperature is preferably 70°C or higher and 700°C or lower, more preferably 100°C or higher and 500°C or lower, even more preferably 100°C or higher and 300°C or lower, yet even more preferably 120°C or higher and 300°C or lower, and yet even more preferably 120°C or higher and 200°C or lower. When the heating temperature is preferably 300°C or lower, and more preferably 200°C or lower, a hydrogen content of the resulting carbon quantum dot is maintained high. Furthermore, the retention time at the heating temperature is preferably 0.01 hours or longer and 45 hours or less, more preferably 0.1 hours or longer and 30 hours or less, and even more preferably 0.5 hours or longer and 10 hours or less. The particle size of the resulting carbon quantum dot and the emission wavelength can be adjusted by the heating time. Furthermore, here, heating may be performed in a non-oxidizing atmosphere while an inert gas such as nitrogen is circulated.

In the case where irradiation with an electromagnetic wave (e.g., microwave) is performed, the wattage is preferably 1 W or greater and 1500 W or less, and more preferably 1 W or greater to 1000 W or less. Furthermore, the heating time by the electromagnetic wave (e.g., microwave) is preferably 0.01 hours or longer and 10 hours or less, more preferably 0.01 hours or longer and 5 hours or less, and even more preferably 0.01 hours or longer and 1 hour or less. The particle size of the resulting carbon quantum dot and the emission wavelength can be adjusted by the irradiation time of the electromagnetic wave.

The electromagnetic wave irradiation can be performed by, for example, a semiconductor type electromagnetic wave radiation device. The irradiation with the electromagnetic wave is preferably performed while the temperature of the mixture is checked. The irradiation of the electromagnetic wave is preferably performed while the heating temperature is adjusted to 70°C or higher and 700°C or lower, more preferably 100°C or higher and 300°C or lower, even more preferably 120°C or higher and 300°C or lower, and yet even more preferably 120°C or higher and 200°C or lower. When the heating temperature is preferably 300°C or lower, and more preferably 200°C or lower, a hydrogen content of the resulting carbon quantum dot is maintained high.

By this heating, the carbon quantum dots are produced. Note that the crystalline compound is present around the resulting carbon quantum dots. The carbon quantum dots may be used for various purposes as a composition, where the carbon quantum dots and the crystalline compound are mixed. Alternatively, the carbon quantum dots may be isolated, and these may be used for various purposes. Furthermore, a composition containing the resulting carbon quantum dots and the crystalline compound and/or the isolated carbon quantum dots may be washed with an organic solvent and the like and purified by removal of unreacted substances or by-products.

Note that the resulting carbon quantum dots are solid at 1 atm and 25°C. The average particle size measured by observing the carbon quantum dots by using an atomic force microscope (AFM) is preferably 1 nm or higher and 100 nm or lower, and more preferably 1 nm or higher and 80 nm or lower. When the average particle size of the carbon quantum dots is in this range, characteristics as quantum dots tend to be adequately achieved. Note that the average particle size of the carbon quantum dots is preferably determined by measuring 3 or more carbon quantum dots and determining the average value of these.

Furthermore, the carbon quantum dots preferably emit visible light or near-infrared light when a light of a wavelength of 350 nm or higher and 700 nm or lower is irradiated. The maximum emission wavelength at this time is preferably 350 nm or higher and 700 nm or lower, more preferably 450 nm or higher and 680 nm or lower, and particularly preferably 460 nm or higher and 680 nm or lower. When the maximum emission wavelength is in this range, the carbon quantum dots produced by the method according to an embodiment of the present invention can be used for various applications.

Furthermore, the emission quantum yield of the carbon quantum dots is preferably 30% or greater, more preferably 40% or greater, and even more preferably 50% or greater. When the emission quantum yield is in this range, the carbon quantum dots can be used for various applications. Furthermore, when the carbon quantum dot has a content of elemental hydrogen of preferably 2.0 mass% or greater, and more preferably 2.1 mass% or greater, the carbon quantum dot can be dissolved in a polar solvent, such as water. The reason why the carbon quantum dot becomes soluble in a polar solvent when the content of elemental hydrogen is not less than the predetermined amount is not clear; however, it is conceivable that elemental hydrogen contained in the carbon quantum dot is in a form of a hydroxy group or a carboxy group, and because of this, the carbon quantum dot has solubility. The amount of elemental hydrogen is identified by organic elemental analysis performed by the CHN mode of the elemental analyzer PE 2400 Series II (available from PerkinElmer Japan).

### Applications

The carbon quantum dots produced by the production method described above have excellent emission properties. Thus, the carbon quantum dots can be used in various applications. The application of the carbon quantum dots is not particularly limited and can be used for, for example, solar batteries, displays, security inks, quantum dot lasers, biomarkers, lighting materials, thermoelectric materials, photocatalysts, and separating agents for a specific substance, based on the performance of the carbon quantum dots.

Note that the carbon quantum dots described above are solid at 25°C and 1 atm but may be used in various applications in a state of solution where the carbon quantum dots are dispersed in a solvent or the like.

### EXAMPLES

Hereinafter, specific examples of the present invention will be described together with comparative examples, but the present invention is not limited to these.

### Example 1

### (1) Preparation of Carbon Quantum Dot

While being ground in a mortar, 0.1 g of an organic compound (phloroglucinol dihydrate) and 0.1 g of crystalline compound (phenylboronic acid) were mixed. The powder mixture was placed in a screw-top test tube with an internal volume of 15 mL, and the screw-top test tube was sealed with a screw cap with a rubber packing. The screw-top test tube was then heated at 170°C for 1.5 hours while nitrogen was circulated in the screw-top test tube, and a carbon quantum dot composition that was solid at 1 atm and 25°C (composition containing carbon quantum dots and the crystalline compound) was prepared.

### (2) Evaluation of Solid-state Emission Properties

The prepared composition was sandwiched in KBr plates and pressed, and a measurement sample was prepared. The emission wavelength (fluorescence wavelength) and emission quantum yield of the measurement sample in a solid state were evaluated using a spectrofluorometer FP-8500 (available from JASCO Corporation) equipped with an integrating sphere unit ILF-835. Light with a wavelength at which the emission quantum yield of the composition was maximized was irradiated as the excitation light. The results are shown in Table 1.

### (3) Evaluation of Amount of Elemental Hydrogen and Water Solubility

The amount of elemental hydrogen was identified by performing an elemental analysis of the produced carbon quantum dot by organic elemental analysis. Furthermore, the produced carbon quantum dots and water were mixed in a manner that the concentration of the carbon quantum dots became 0.1 mass%. Then, it was visually checked whether the aqueous solution became clear or not. When no sediment was present, the prepared carbon quantum dot was determined to be soluble in water. When sediments were present, the prepared carbon quantum dot was determined to be insoluble in water. The results are shown in Table 1.

### Example 2

By the same method as in Example 1, 0.1 g of an organic compound (phloroglucinol dihydrate) and 0.2 g of a crystalline compound (phenylboronic acid) were mixed, and thus a mixture was prepared. The mixture was heated in the same manner as in Example 1, and a carbon quantum dot composition that was solid at 1 atm and 25°C (composition containing carbon quantum dots and the crystalline compound) was prepared. The solid-state emission properties were evaluated for the produced composition in the same manner as in Example 1. The amount of elemental hydrogen was also determined. The results are shown in Table 1.

### Example 3

Organic compounds (0.1 g of phloroglucinol dihydrate and 0.1 g of melamine) and 0.144 g of a crystalline compound (phenylboronic acid) were mixed by the same method as in Example 1, and thus a mixture was prepared. The mixture was heated in the same manner as in Example 1 at the temperature and for the time listed in Table 1, and a carbon quantum dot composition that was solid at 1 atm and 25°C (composition containing carbon quantum dots and the crystalline compound) was prepared. The solid-state emission properties were evaluated for the produced composition in the same manner as in Example 1. The amount of elemental hydrogen was also determined. The results are shown in Table 1.

### Example 4

Organic compounds (0.03 g of phloroglucinol dihydrate and 0.06 g of melamine) and 0.144 g of a crystalline compound (phenylphosphonic acid) were mixed by the same method as in Example 1, and thus a mixture was prepared. The mixture was heated in the same manner as in Example 1, and a carbon quantum dot composition that was solid at 1 atm and 25°C (composition containing carbon quantum dots and the crystalline compound) was prepared. The solid-state emission properties were evaluated for the produced composition in the same manner as in Example 1. The amount of elemental hydrogen was also determined. The results are shown in Table 1.

### Example 5

Organic compounds (0.03 g of phloroglucinol dihydrate and 0.06 g of melamine) and 0.144 g of a crystalline compound (phenylphosphonic acid) were mixed by the same method as in Example 1, and thus a mixture was prepared. The mixture was heated in the same manner as in Example 1 at the temperature and for the time listed in Table 1, and a carbon quantum dot composition that was solid at 1 atm and 25°C (composition containing carbon quantum dots and the crystalline compound) was prepared. The solid-state emission properties were evaluated for the produced composition in the same manner as in Example 1. Furthermore, determination of the amount of elemental hydrogen and evaluation of water solubility were performed. The results are shown in Table 1.

### Example 6

By the same method as in Example 1, 0.02 g of an organic compound (dicyandiamide) and 0.096 g of a crystalline compound (boric acid) were mixed, and thus a mixture was prepared. The mixture was heated in the same manner as in Example 1, and a carbon quantum dot composition that was solid at 1 atm and 25°C (composition containing carbon quantum dots and the crystalline compound) was prepared. The solid-state emission properties were evaluated for the produced composition in the same manner as in Example 1. The amount of elemental hydrogen was also determined. The results are shown in Table 1.

### Example 7

By the same method as in Example 1, 0.03 g of an organic compound (3-aminophenylboronic acid) and 0.144 g of a crystalline compound (boric acid) were mixed, and thus a mixture was prepared. The mixture was heated in the same manner as in Example 1, and a carbon quantum dot composition that was solid at 1 atm and 25°C (composition containing carbon quantum dots and the crystalline compound) was prepared. The solid-state emission properties were evaluated for the produced composition in the same manner as in Example 1. The amount of elemental hydrogen was also determined. The results are shown in Table 1.

### Example 8

Organic compounds (0.03 g of citric acid and 0.02 g of melamine) and 0.048 g of a crystalline compound (sulfanilic acid) were mixed by the same method as in Example 1, and thus a mixture was prepared. The mixture was heated in the same manner as in Example 1, and a carbon quantum dot composition that was solid at 1 atm and 25°C (composition containing carbon quantum dots and the crystalline compound) was prepared. The solid-state emission properties were evaluated for the produced composition in the same manner as in Example 1. Furthermore, determination of the amount of elemental hydrogen and evaluation of water solubility were performed. The results are shown in Table 1.

### Example 9

Organic compounds (0.03 g of phloroglucinol dihydrate and 0.06 g of melamine) and 0.144 g of a crystalline compound (4-hydroxybenzenesulfonic acid hydrate) were mixed by the same method as in Example 1, and thus a mixture was prepared. The mixture was heated in the same manner as in Example 1, and thus solid-state carbon quantum dots were prepared. The solid-state emission properties were evaluated for the produced carbon quantum dots in the same manner as in Example 1. The amount of elemental hydrogen was also determined. The results are shown in Table 1.

### Example 10

Organic compounds (0.15 g of citric acid and 0.1 g of dicyandiamide) and 0.72 g of a crystalline compound (boric acid) were mixed by the same method as in Example 1, and thus a mixture was prepared. The mixture was heated in the same manner as in Example 1, and a carbon quantum dot composition that was solid at 1 atm and 25°C (composition containing carbon quantum dots and the crystalline compound) was prepared. The solid-state emission properties were evaluated for the produced composition in the same manner as in Example 1. The amount of elemental hydrogen was also determined. The results are shown in Table 1.

### Example 11

By the same method as in Example 1, 0.2 g of an organic compound (phloroglucinol dihydrate) and 0.1 g of a crystalline compound (triphenylboroxine) were mixed, and thus a mixture was prepared. The mixture was heated in the same manner as in Example 1, and a carbon quantum dot composition that was solid at 1 atm and 25°C (composition containing carbon quantum dots and the crystalline compound) was prepared. The solid-state emission properties were evaluated for the produced composition in the same manner as in Example 1. The amount of elemental hydrogen was also determined. The results are shown in Table 1.

### Example 12

Organic compounds (0.03 g of citric acid and 0.03 g of urea) and 0.144 g of a crystalline compound (boric acid) were mixed by the same method as in Example 1, and thus a mixture was prepared. The mixture was heated in the same manner as in Example 1, and a carbon quantum dot composition that was solid at 1 atm and 25°C (composition containing carbon quantum dots and the crystalline compound) was prepared. The solid-state emission properties were evaluated for the produced composition in the same manner as in Example 1. The amount of elemental hydrogen was also determined. The results are shown in Table 1.

### Comparative Example 1

Solid-state carbon quantum dots were prepared by heating 0.2 g of an organic compound (phloroglucinol dihydrate) in the same manner as in Example 1. The emission properties were evaluated for the produced carbon quantum dots in the same manner as in Example 1. The results are shown in Table 1.

### Comparative Example 2

Organic compounds (0.1 g of phloroglucinol dihydrate and 0.1 g of melamine) were mixed by the same method as in Example 1, and thus a mixture was prepared. The mixture was heated in the same manner as in Example 1 at the temperature and for the time listed in Table 1, and thus solid-state carbon quantum dots were prepared. The solid-state emission properties were evaluated for the produced carbon quantum dots in the same manner as in Example 1. The results are shown in Table 1.

### Comparative Example 3

0.1 g of a crystalline compound (phenylboronic acid) was heated in the same manner as in Example 1. The solid-state emission properties were evaluated for the produced compound in the same manner as in Example 1. Note that, for the produced compound, the excitation wavelength needed to be lower than 350 nm, and the observed emission wavelength was also lower than 350 nm. That is, the light emission was considered to be light emission that was characteristic of the raw material, and it was conceivable that no carbon quantum dots were prepared. The results are shown in Table 1.

### Comparative Example 4

0.3 g of a crystalline compound (boric acid) was heated in the same manner as in Example 1. The solid-state emission properties were evaluated for the produced compound in the same manner as in Example 1. Note that, for the produced compound, the excitation wavelength needed to be lower than 350 nm, and the observed emission wavelength was also lower than 350 nm. That is, the light emission was considered to be light emission that was characteristic of the raw material, and it was conceivable that no carbon quantum dots were prepared. The results are shown in Table 1.

### Comparative Example 5

0.3 g of a crystalline compound (phenylphosphonic acid) was heated in the same manner as in Example 1. The solid-state emission properties were evaluated for the produced compound in the same manner as in Example 1. Note that, for the produced compound, the excitation wavelength needed to be lower than 350 nm, and the observed emission wavelength was also lower than 350 nm. That is, the light emission was considered to be light emission that was characteristic of the raw material, and it was conceivable that no carbon quantum dots were prepared. The results are shown in Table 1.

### Comparative Example 6

0.3 g of a crystalline compound (sulfanilic acid) was heated in the same manner as in Example 1. The solid-state emission properties were evaluated for the produced compound in the same manner as in Example 1. Note that, for the produced compound, the excitation wavelength needed to be lower than 350 nm, and the observed emission wavelength was also lower than 350 nm. That is, the light emission was considered to be light emission that was characteristic of the raw material, and it was conceivable that no carbon quantum dots were prepared. The results are shown in Table 1.

### Comparative Example 7

0.3 g of a crystalline compound (4-hydroxybenzenesulfonic acid hydrate) was heated in the same manner as in Example 1. The solid-state emission properties were evaluated for the produced compound in the same manner as in Example 1. Note that, for the produced compound, the excitation wavelength needed to be lower than 350 nm, and the observed emission wavelength was also lower than 350 nm. That is, the light emission was considered to be light emission that was characteristic of the raw material, and it was conceivable that no carbon quantum dots were prepared. The results are shown in Table 1.

### Comparative Example 8

0.3 g of a crystalline compound (triphenylboroxine) was heated in the same manner as in Example 1. The solid-state emission properties were evaluated for the produced compound in the same manner as in Example 1. Note that, for the produced compound, the excitation wavelength needed to be lower than 350 nm, and the observed emission wavelength was also lower than 350 nm. That is, the light emission was considered to be light emission that was characteristic of the raw material, and it was conceivable that no carbon quantum dots were prepared. The results are shown in Table 1.

### Comparative Example 9

Solid-state carbon quantum dots were prepared by heating 0.15 g of an organic compound (citric acid) and 0.048 g of a crystalline compound (boric acid) in the same manner as in Example 1. The solid-state emission properties were evaluated for the produced carbon quantum dots in the same manner as in Example 1. The results are shown in Table 1.

### Comparative Example 10

Carbon quantum dots were prepared by heating 0.15 g of an organic compound (phloroglucinol dihydrate) and 0.091 g of phosphoric acid, which was in a liquid state at 1 atm and 25°C, at 200°C for 3 hours. The solid-state emission properties were evaluated for the produced carbon quantum dots in the same manner as in Example 1. The results are shown in Table 1.

### Comparative Example 11

Organic compounds (0.03 g of citric acid and 0.02 g of dicyandiamide) and 0.144 g of a crystalline compound (boric acid) were mixed by the same method as in Example 1, and thus a mixture was prepared. The mixture was placed in a quartz test tube having an internal volume of 25 mL and heated at 500°C for 1.5 hours in the air, and thus solid-state carbon quantum dots were synthesized. The solid-state emission properties were evaluated for the produced carbon quantum dots in the same manner as in Example 1. Furthermore, the amount of elemental hydrogen was determined, and the water solubility was evaluated. The results are shown in Table 1.

### Comparative Example 12

Organic compounds (0.03 g of phloroglucinol dihydrate and 0.06 g of melamine) and 0.144 g of a crystalline compound (phenylphosphonic acid) were mixed by the same method as in Example 1, and thus a mixture was prepared. The mixture was placed in a quartz test tube having an internal volume of 25 mL and heated at 500°C for 1.5 hours in the air, and thus solid-state carbon quantum dots were synthesized. The solid-state emission properties were evaluated for the produced carbon quantum dots in the same manner as in Example 1. Furthermore, the amount of elemental hydrogen was determined, and the water solubility was evaluated. The results are shown in Table 1.

**Table 1**

| | Raw material | Mass ratio [%] (Crystalline compound)/ (organic compound) | Heating condition | Excitation wavelength/ maximum emission wavelength [nm] | Emission quantum yield [%] | Amount of elemental hydrogen [mass%] | Water solubility |
|---|---|---|---|---|---|---|---|
| Example 1 | Phloroglucinol dihydrate 0.1 g | 100 | 170°C, 1.5 h | 580/625 | 76 | 405 | Soluble |
| | Phenylboronic acid 0.1 g | | | | | | |
| Example 2 | Phloroglucinol dihydrate 0.1 g | 200 | 170°C, 1.5 h | 600/620 440/500, 530 | 78 | 4.08 | Undetermined |
| | Phenylboronic acid 0.2 g | | | | | | |
| Example 3 | Phloroglucinol dihydrate 0.1 g melamine 0.1 | 72 | 200°C, 1.5 h | 600/620 | 28 | 3.76 | Undetermined |
| | Phenylboronic acid 0.144 g | | | | | | |
| Example 4 | Phloroglucinol dihydrate 0.03 g melamine 0.06 g | 160 | 170°C, 1.5 h | 600/615 | 16 | 3.52 | Undetermined |
| | Phenylphosphonic acid 0.144 g | | | | | | |
| Example 5 | Phloroglucinol dihydrate 0.03 g melamine 0.06 g | 160 | 150°C, 1.5 h | 560/580 | 20 | 3.64 | Soluble |
| | Phenylphosphonic acid 0.144 g | | | | | | |
| Example 6 | 0.02 g of dicyandiamide | 480 | 170°C, 1.5 h | 360/390 | 58 | 2.76 | Undetermined |
| | Boric acid 0.096 g | | | | | | |
| Example 7 | 3-Aminophenylboronic acid 0.03 g | 480 | 170°C, 1.5 h | 420/500 | 33 | 2.98 | Undetermined |
| | Boric acid 0.144 g | | | | | | |
| Example 8 | Citric acid 0.03 g melamine 0.02 g | 96 | 170°C, 1.5 h | 500/570 | 27 | 400 | Soluble |
| | Sulfanilic acid 0.048 g | | | | | | |
| Example 9 | Phloroglucinol dihydrate 0.03 g melamine 0.06 g | 160 | 170°C, 1.5 h | 560/590 | 20 | 3.78 | Undetermined |
| | 4-Hydroxybenzenesulfonic acid hydrate 0.144 g | | | | | | |
| Example 10 | Citric acid 0.15 g dicyandiamide 0.1 g | 288 | 170°C, 1.5 h | 360/442 | 70 | 3.09 | Undetermined |
| | Boric acid 0.72 g | | | | | | |
| Example 11 | Phloroglucinol dihydrate 0.2 g | 50 | 170°C, 1.5 h | 600/620 | 75 | 4.71 | Undetermined |
| | Triphenylboroxine 0.1 g | | | | | | |
| Example 12 | Citric acid 0.03 g urea 0.03 g | 240 | 170°C, 1.5 h | 380/455 | 79 | 2.77 | Undetermined |
| | Boric acid 0.144 g | | | | | | |
| Comparative Example 1 | Phloroglucinol dihydrate 0.2 g | 0 | 170°C, 1.5 h | 500/535 | 3 | Not measured | Undetermined |
| Comparative Example 2 | Phloroglucinol dihydrate 0.1 g | 0 | 200°C, 1.5 h | Weak light emission | 1 | Not measured | Undetermined |
| | Melamine 0.1 g | | | | | | |
| Comparative Example 3 | Phenylboronic acid 0.1 g | - | 170°C, 1.5 h | **(240*/*305)* | *'(31)* | Not measured | Undetermined |
| Comparative Example 4 | Boric acid 0.3 g | - | 170°C, 1.5 h | **(260*/*290)* | **(7)* | Not measured | Undetermined |
| Comparative Example 5 | Phenylphosphonic acid 0.3 g | - | 170°C, 1.5 h | **(260*/*293)* | '(4) | Not measured | Undetermined |
| Comparative Example 6 | Sulfanilic acid 0.3 g | - | 170°C, 1.5 h | **(240*/*285)* | '(16) | Not measured | Undetermined |
| Comparative Example 7 | 4-Hydroxybenzenesulfonic acid hydrate 0.3 g | - | 170°C, 1.5 h | **(240*/*345)* | '(4) | Not measured | Undetermined |
| Comparative Example 8 | Triphenylboroxine 0.3 g | - | 170°C, 1.5 h | **(260*/*300)* | *'(18)* | Not measured | Undetermined |
| Comparative Example 9 | Citric acid 0.15 g | 32 | 170°C, 1.5 h | 400/532 | 5 | Not measured | Undetermined |
| | Boric acid 0.048 g | | | | | | |
| Comparative Example 10 | Phloroglucinol dihydrate 0.15 g | 61 | 200°C, 3 h | No light emission | - | Not measured | Undetermined |
| | Phosphoric acid 0.091 g (liquid) | | | | | | |
| Comparative Example 11 | Citric acid 0.03 g dicyandiamide 0.02 g | 288 | 500°C, 1.5 h | No light emission | - | <0.5 | Insoluble |
| | Boric acid 0.144 g | | | | | | |
| Comparative Example 12 | Phloroglucinol dihydrate 0.03 g melamine 0.06 g | 160 | 500°C, 1.5 h | No light emission | . | 1.80 | Insoluble |
| | Phenylphosphonic acid 0.144 g | | | | | | |

| | | | | | | | |
|---|---|---|---|---|---|---|---|
| * Excitation by light having a wavelength of lower than 350 nm | | | | | | | |

As shown in Comparative Example 1 above, in all cases where only the organic compound was heated to prepare the carbon quantum dots, the emission quantum yield was low, and it is conceivable that an adequate amount of the carbon quantum dots was not produced (Comparative Examples 1 and 2). Furthermore, in cases where only the crystalline compound was heated, light emission was not observed in wavelengths of 350 nm or higher and 750 nm or lower, and it is conceivable that carbon quantum dots were not produced (Comparative Examples 3 to 8).

Furthermore, even in a case where the organic compound and the crystalline compound were mixed and heated (Comparative Example 9), when the amount of the crystalline compound was excessively less than the amount of the organic compound, the emission quantum yield was low (Comparative Example 9). Furthermore, in a case where the phosphoric acid that was in a liquid state at 1 atm and 25°C was heated together with the organic compound, no light emission was observed (Comparative Example 10).

On the other hand, in the production methods of Examples 1 to 12, where not less than the certain amount of the crystalline compound was mixed to the organic compound and heated at 100°C or higher and 300°C or lower, carbon quantum dots were produced through simple processes including preparation of a mixture and heating, without use of a solvent. It is conceivable that, due to mixing of the crystalline compound together with the organic compound, the size of the carbon quantum dot produced by the heating became the predetermined size using the crystal of the crystalline compound as a mold. Furthermore, the produced carbon quantum dots were less likely to aggregate, and it is conceivable that the emission quantum yield became higher also because of this.

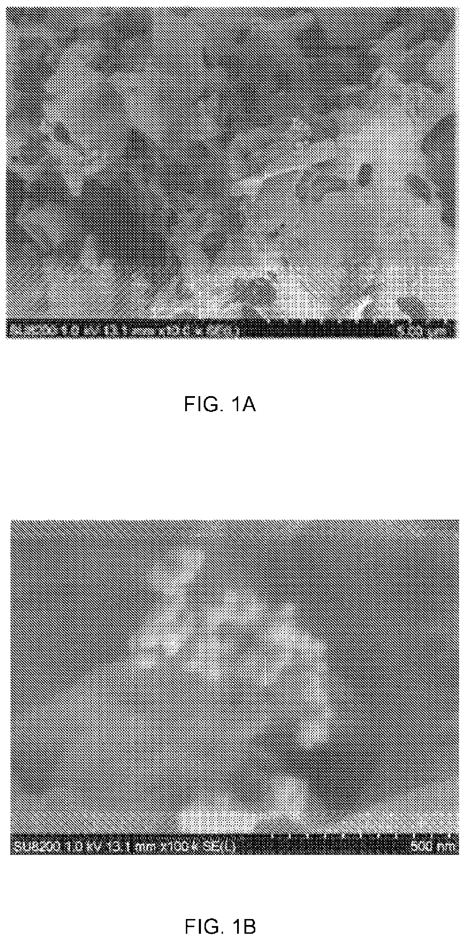

FIG. 1A is a photograph of the composition containing the carbon quantum dots and the crystalline compound produced by the method for producing carbon quantum dots of Example 3 taken by a transmission electron microscope. FIG. 1B is an enlarged photograph around a central part of the photograph of FIG. 1A. As shown in FIG. 1A, crystals of phenylboronic acid remained in the composition. Furthermore, as shown in FIG. 1B, particulate aggregates, which were considered to be carbon quantum dots of approximately 20 nm, were observed in a part of the crystal. Note that a large pore contained in the crystal of FIG. 1A is considered to be a mark left when gases generated in the heating (e.g., water, carbon dioxide, hydrogen) escaped.

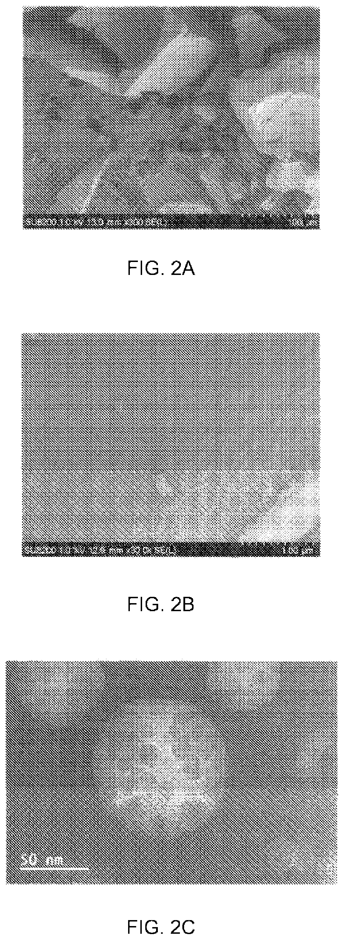

FIG. 2A is a photograph of the composition containing the carbon quantum dots and the crystalline compound obtained by the method for producing carbon quantum dots of Example 10 taken by a transmission electron microscope. FIG. 2B is an enlarged photograph of a surface of a mass shown in the photograph of FIG. 2A. FIG. 2C is a photograph of an inner part of a pore of the photograph of FIG. 2B. As shown in FIG. 2A, the composition contains a mass in a form of block or rubble, and this was considered to be a crystal of boric acid or boron oxide. Furthermore, as shown in FIG. 2B, a pore (black dot) of 10 to 50 nm was observed on the surface of the mass. Furthermore, as shown in FIG. 2C, particles of 3 to 10 nm, which were considered to be carbon quantum dots, were observed in the inner part of the pore.

Furthermore, as shown in Table 1, when the heating was performed at 300°C or lower as in Example 1, Example 5, and Example 8, the amount of elemental hydrogen in the produced carbon quantum dots became 2.0 mass% or greater, and dissolution in water was possible. Note that, when the aqueous solution each prepared in Example 1, Example 5, and 8 was irradiated with a light having a wavelength of 365 nm, it was found that the aqueous solution yielded a fluorescence. On the other hand, when the heating was performed at 500°C as in Comparative Examples 11 and 12, the amount of elemental hydrogen in the produced carbon quantum dots became less than 2.0 mass%, and dissolution in water was not possible. Furthermore, when the aqueous solution in which the carbon quantum dots were added was irradiated with a light having a wavelength of 365 nm, fluorescence was not confirmed.

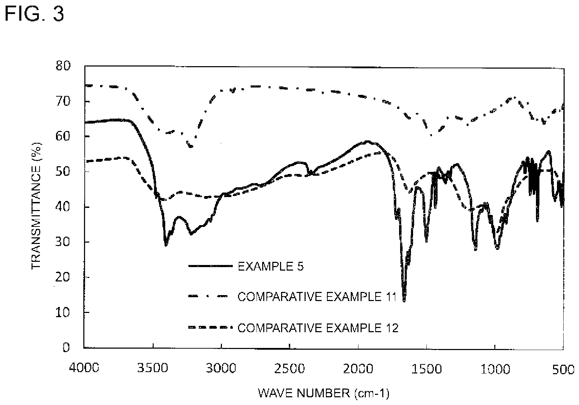

FIG. 3 shows an infrared transmission spectrum of Example 5, Comparative Example 11, and Comparative Example 12. A peak around a wave number of 3400 cm⁻¹ indicates presence of an OH group. In Example 5, a sharp peak is present around a wave number of 3500 cm⁻¹, showing that a large number of OH groups is contained. On the other hand, in Comparative Example 11 and Comparative Example 12, although some peaks are observed, there is no sharp peak, and it can be said that the amount of OH groups is small. Furthermore, a peak around a wave number of 1700 cm⁻¹ is considered to indicate presence of a C=O group, and a sharp peak is observed for Example 5, showing that a large number of C=O groups is contained. On the other hand, in Comparative Example 11 and Comparative Example 12, although some peaks are observed, there is no sharp peak, showing that the amount of C=O groups is small. It is conceivable that, because of this, the carbon quantum dots were soluble in water in Example 5, and the carbon quantum dots were insoluble in water in Comparative Examples 11 and 12.

The present application claims priority to JP 2021-050403 filed on March 24, 2021. The contents described in the specification and drawing of this application are all incorporated in the specification of the present application.

### INDUSTRIAL APPLICABILITY

According to the method for producing carbon quantum dots of an embodiment of the present invention, the carbon quantum dots having high emission quantum yield can be prepared through simple processes. The carbon quantum dots produced by the method can be applied in various products such as various lighting materials and thermoelectric materials.

## Claims

1. A method for producing carbon quantum dots,
the method comprising:
preparing a mixture by mixing
a crystalline compound containing boron, sulfur, and/or phosphorus and being solid at 1 atm and 25°C, and
an organic compound containing a reactive group; and
preparing carbon quantum dots by heating the mixture at 100°C or higher and 300°C or lower substantially in the absence of a solvent;
an amount of the crystalline compound in the mixture being 45 parts by mass or greater and 1000 parts by mass or less with respect to 100 parts by mass of the organic compound.

2. The method for producing carbon quantum dots according to claim 1, wherein
the crystalline compound is an organic compound and has an aromatic ring in a molecule.

3. The method for producing carbon quantum dots according to claim 1, wherein
the crystalline compound is boric acid.

4. The method for producing carbon quantum dots according to any one of claims 1 to 3, wherein
a maximum emission wavelength of the carbon quantum dots is 350 nm or higher and 750 nm or lower.
